# EUROPEAN PATENT APPLICATION

(11) **EP 3 355 447 A1**
(43) Date of publication of application: **01.08.2018**
(21) Application number: 18151069.4
(22) Date of filing: 10.01.2018
(51) Int. Cl.: H02K 3/52, H02K 11/33, H02K 1/14

(54) **MOTOR AND BLOWER INCLUDING THE SAME**

(30) Priority: 31.01.2017 JP 2017015728
(71) Applicant: Nidec Corporation, Kyoto-shi, Kyoto 601-8205 (JP)
(72) Inventor: SHIOZAWA, Kazuhiko, Kyoto, 601-8205 (JP); KISHI, Sakae, Kyoto, 601-8205 (JP)
(74) Representative: Zimmermann, Tankred Klaus

(57) **Abstract**

A motor (1) includes a stator (2); and a rotor (3) that rotates around a central axis (C) extending upward and downward and that has a magnet (31) disposed at an inner side in a radial direction of the stator; and a circuit board (7) that is disposed at one of one side and the other side in the axial direction of the stator and that controls rotation of the rotor. The stator includes a ring-shaped core back (21), a plurality of teeth (22) extending inward in the radial direction from an inner peripheral surface of the core back and disposed in a circumferential direction, and a coil (23) wound around each of the teeth. The circuit board has a board protrusion (7p) protruding outward in the radial direction with respect to an outer peripheral surface of the core back. A bus bar (5) that is connected to an extended wire (23a) of the coil is disposed on an end portion in the axial direction of the core back, at a side at which the circuit board is disposed. The bus bar has a board connection terminal (54) that is connected to the board protrusion. The board connection terminal is disposed at an outer side in the radial direction with respect to the outer peripheral surface of the core back.

## Description

### Field of the Invention

The present disclosure relates to a motor and a blower including the motor.

### Description of the Related Art

A conventional motor is disclosed in Japanese Unexamined Patent Application Publication No. 2011-182512. The motor is an inner-rotor motor, and includes a rotor and a stator. The rotor rotates around a central axis extending upward and downward. The stator is disposed at the outer side in the radial direction of the rotor, and has a back core part and a plurality of teeth. The back core part is formed in a ring shape. The plurality of teeth extend inward in the radial direction from an inner peripheral surface of the back core part, and are disposed side by side in the circumferential direction. A coil is wound around each of the teeth.

A bus bar housing part extending in an arc shape in the circumferential direction is provided above the teeth in the axial direction. The bus bar housing part houses the bus bar. The bus bar includes a connection protrusion and an external connection terminal. A coil is connected to the connection protrusion. An external leading conductor located outside the motor is connected to the external connection terminal.

Also, Japanese Unexamined Patent Application Publication No. 2016-144394 discloses a motor including a circuit board disposed below in the axial direction of a stator. The circuit board is disposed at the inner side in the radial direction with respect to an outer peripheral surface of the stator.

### SUMMARY OF THE INVENTION

When the external connection terminal of the bus bar described in Japanese Unexamined Patent Application Publication No. 2011-182512 is connected to the circuit board described in Japanese Unexamined Patent Application Publication No. 2016-144394, the circuit board is disposed at the inner side in the radial direction with respect to the outer peripheral surface of the stator (core back), and hence the external connection terminal of the bus bar is disposed at the inner side in the radial direction with respect to the outer peripheral surface of the stator. A wiring pattern is formed on a portion of the circuit board at the inner side in the radial direction with respect to the outer peripheral surface of the stator, if the external connection terminal of the bus bar is connected to the circuit board, the degree of freedom of design for the wiring pattern on the circuit board has been decreased.

It is an object of the present disclosure to provide a motor that can increase the degree of freedom of design for the wiring pattern on the circuit board, and to provide a blower including the motor.

An exemplary motor according to the present disclosure includes a stator; a rotor that rotates around a central axis extending upward and downward and that has a magnet disposed at an inner side in a radial direction of the stator; and a circuit board that is disposed at one of one side and the other side in the axial direction of the stator and that controls rotation of the rotor. The stator includes a ring-shaped core back, a plurality of teeth extending inward in the radial direction from an inner peripheral surface of the core back and disposed in a circumferential direction, and a coil wound around each of the teeth. The circuit board has a board protrusion protruding outward in the radial direction with respect to an outer peripheral surface of the core back. A bus bar that is connected to an extended wire of the coil is disposed on an end portion in the axial direction of the core back, at a side at which the circuit board is disposed. The bus bar has a board connection terminal that is connected to the board protrusion. The board connection terminal is disposed at an outer side in the radial direction with respect to the outer peripheral surface of the core back.

An exemplary blower according to the present disclosure includes the motor with the above-described configuration; an impeller that is disposed above the motor and that rotates around the central axis by driving of the motor; and a motor housing that houses the stator. The circuit board is disposed below the stator. An inner peripheral surface of the motor housing located above the stator is inclined toward the central axis as the inner peripheral surface extends upward.

With the exemplarily motor of the present disclosure, the motor that can increase the degree of freedom of design for the wiring pattern on the circuit board, and a blower including the motor can be provided.

The above and other elements, features, steps, characteristics and advantages of the present disclosure will become more apparent from the following detailed description of the preferred embodiments with reference to the attached drawings.

### BRIEF DESCRIPTION OF THE DRAWINGS

Fig. 1 is a perspective view of a cleaner in which a blower including a motor according to an embodiment of the present disclosure is mounted;
Fig. 2 is a perspective view of the blower including the motor according to the embodiment of the present disclosure;
Fig. 3 is a front view of the inside of the blower including the motor according to the embodiment of the present disclosure;
Fig. 4 is a side-surface cross-sectional view of the blower including the motor according to the embodiment of the present disclosure;
Fig. 5 is a perspective view of the motor according to the embodiment of the present disclosure in a state before fusing processing when viewed from above;
Fig. 6 is a front view of the motor according to the embodiment of the present disclosure in the state before the fusing processing;
Fig. 7 is a top view of the motor according to the embodiment of the present disclosure in the state before the fusing processing;
Fig. 8 is a plan cross-sectional view of the motor according to the embodiment of the present disclosure in the state before the fusing processing;
Fig. 9 is a perspective view of the motor according to the embodiment of the present disclosure in the state before the fusing processing when viewed from below;
Fig. 10 is a bottom view of the motor according to the embodiment of the present disclosure in the state before the fusing processing;
Fig. 11 is a front view of an extended-wire connection portion of the motor according to the embodiment of the present disclosure in a state after the fusing processing; and
Fig. 12 is a plan cross-sectional view of a motor according to a modification of the embodiment of the present disclosure in a state before fusing processing.

### DETAILED DESCRIPTION OF THE PREFERRED EMBODIMENTS

Exemplarily embodiments of the present disclosure are described below with reference to the drawings. In this description, for a motor 1 and a blower 100, a direction parallel to a central axis C of the motor 1 is named "axial direction," a direction orthogonal to the central axis C of the motor 1 is named "radial direction," and a direction extending along an arc centered at the central axis C of the motor 1 is named "circumferential direction." Also, "plan view" represents a view in the axial direction.

Likewise, for an impeller 110, in a state in which the impeller 110 is assembled in the blower 100, directions corresponding to the axial direction, radial direction, and circumferential direction of the blower 100 are respectively merely called "axial direction," "radial direction," and "circumferential direction." Also, in this description, for the blower 100, the shapes of components and the positional relationships among the components are described while the axial direction is an up-down direction and an air inlet port 103 side of a fan casing 102 is an upper side with respect to the impeller 110. Also, for the motor 1, the shapes of components and the positional relationships among the components are described while the axial direction is an up-down direction and a circuit board 7 side is a lower side with respect to the stator 2. The up-down direction is a name merely used for the explanation, and is not used for limiting the actual positional relationships and directions. Also, "upstream" and "downstream" respectively represent upstream and downstream in a circulation direction of the air sucked through the air inlet port 103 when the impeller 110 is rotated.

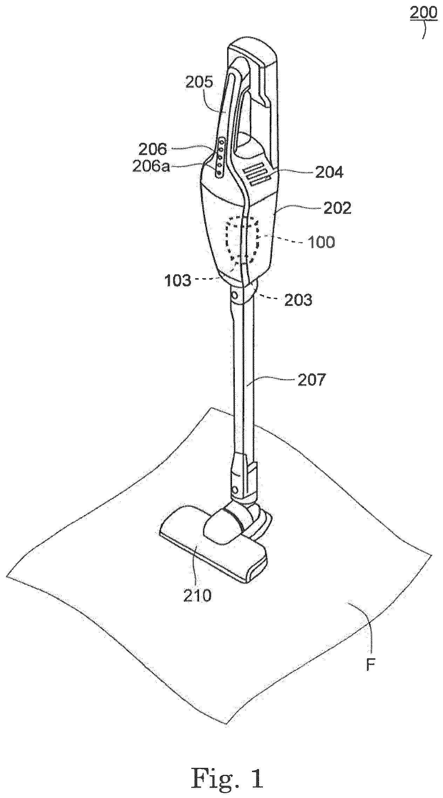

In this description, for a cleaner 200, the shapes of components and the positional relationships among the components are described while a direction toward a floor surface F (surface to be cleaned) in Fig. 1 is named "downward," and a direction away from the floor surface F is named "upward." It is to be noted that the directions are names merely used for the explanation, and are not used for limiting the actual positional relationships and directions.

A cleaner in which a blower including a motor according to an exemplarily embodiment of the present disclosure is mounted is described below. Fig. 1 is a perspective view of the cleaner according to the embodiment. The cleaner 200 is a stick-shaped electric cleaner. The cleaner 200 includes a casing 202 having an air inlet port 203 open at a lower surface of the casing 202 and an air outlet port 204 open at an upper surface of the casing 202. A power cable (not illustrated) extends from a rear surface of the casing 202. The power cable is connected to a power receptacle (not illustrated) provided at a side wall surface of a room, and supplies the cleaner 200 with power. The cleaner 200 may be a robot-shaped, canister-shaped, or handy electric cleaner.

An air passage (not illustrated) that couples the air inlet port 203 with the air outlet port 204 is formed in the casing 202. In the air passage, a dust collector (not illustrated), a filter (not illustrated), and the blower 100 are disposed in that order from the upstream side toward the downstream side. Foreign substances such as dust contained in the air circulating in the air passage are caught by the filter and collected in the dust collector formed in a container shape. The dust collector and the filter are removably attached to the casing 202.

A handle 205 and an operation part 206 are provided at an upper section of the casing 202. A user can hold the handle 205 and move the cleaner 200. The operation part 206 has a plurality of buttons 206a. Operational setting of the cleaner 200 is made by operating the buttons 206a. For example, by operating the buttons 206a, start of driving, stop of driving, change of the rotation speed of the blower 100, and so forth, are instructed. A rod-shaped suction pipe 207 is connected to the air inlet port 203. A suction nozzle 210 is attached to an upstream end (in the drawing, lower end) of the suction pipe 207 in a removable manner from the suction pipe 207.

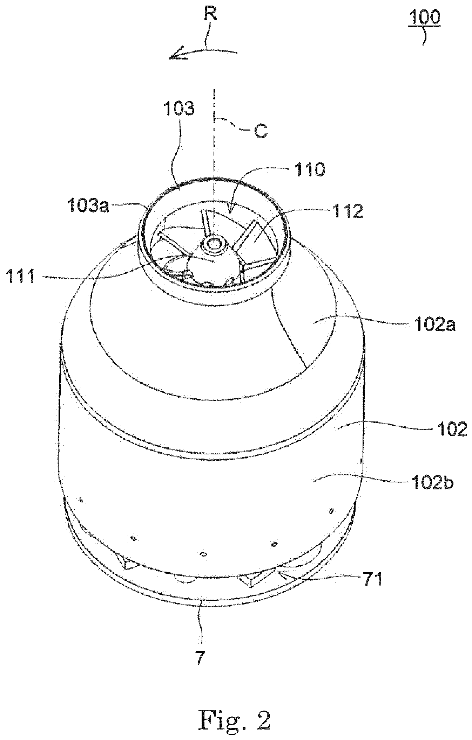

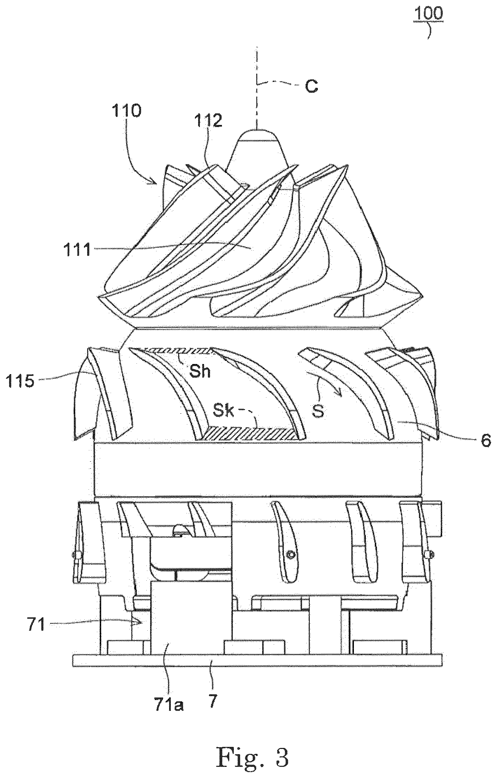

Fig. 2 is a perspective view illustrating the blower 100 including the motor 1 according to the embodiment. Fig. 3 is a front view illustrating the inside of the blower 100. The blower 100 is mounted in the cleaner 200 and sucks the air.

The blower 100 has the fan casing 102 having a cylindrical shape having a circular horizontal cross section. The fan casing 102 houses the impeller 110 and a motor housing 6. The fan casing 102 has an upper case part 102a that covers the impeller 110, and a lower case part 102b that covers an outer peripheral surface of the motor housing 6.

The air inlet port 103 is provided at an upper part (upper case part 102a) of the fan casing 102. The air inlet port 103 opens in the up-down direction (axial direction). A bell mouth 103a is provided at the air inlet port 103. The bell mouth 103a is bent inward from an upper end and extends downward. Accordingly, the diameter of the air inlet port 103 is gradually decreased from the upper side toward the lower side. Also, a lower surface of the fan casing 102 opens in the up-down direction.

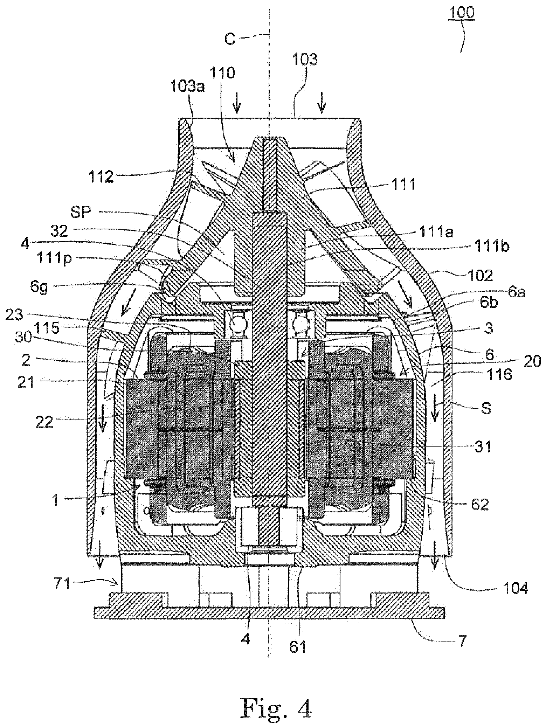

The motor housing 6 has a cylindrical shape having a circular horizontal cross section. The motor housing 6 houses a stator 2 (see Fig. 4) of the motor 1 that is coupled to the impeller 110. The impeller 110 is rotated by driving of the motor 1 in a rotation direction R around the central axis C extending upward and downward.

The upper case part 102a and the lower case part 102b of the fan casing 102 may be formed of a single member, or may be formed of mutually different members.

The impeller 110 is a mixed impeller formed of a resin molded part. The impeller 110 includes a base portion 111 and a plurality of blades 112. The base portion 111 has a diameter that increases as the base portion 111 extends downward. That is, the diameter of the base portion 111 gradually increases toward the lower side. As illustrated in Fig. 4 (described later), an upper end portion (tip end portion) of the base portion 111 is disposed at substantially the same height as the height of a lower end of the bell mouth 103a. The plurality of blades 112 are disposed in the circumferential direction on an outer peripheral surface of the base portion 111. Upper portions of the blades 112 are disposed forward in the rotation direction R with respect to lower portions of the blades 112.

Fig. 4 is a side-surface cross-sectional view of the blower 100. A flow passage 116 is formed in a gap between the fan casing 102 and the motor housing 6. The flow passage 116 communicates with the impeller 110 at an upper end (upstream end) of the flow passage 116. An air outlet port 104 is formed at a lower end (downstream end) of the flow passage 116.

A groove 6g is provided at an upper surface of the motor housing 6. The groove 6g is dented downward and has a ring shape. An impeller protrusion 111p protruding downward is provided at a lower surface of the base portion 111 of the impeller 110. At least a portion of the impeller protrusion 111p is housed in the groove 6g.

An inner peripheral surface 6a and an outer peripheral surface 6b of the motor housing 6 located above the stator 2 are inclined toward the central axis C as the inner and outer peripheral surfaces 6a and 6b extend upward. The inner peripheral surface 6a and the outer peripheral surface 6b of the motor housing 6 located above the stator 2 may be smoothly curved to protrude outward in the radial direction.

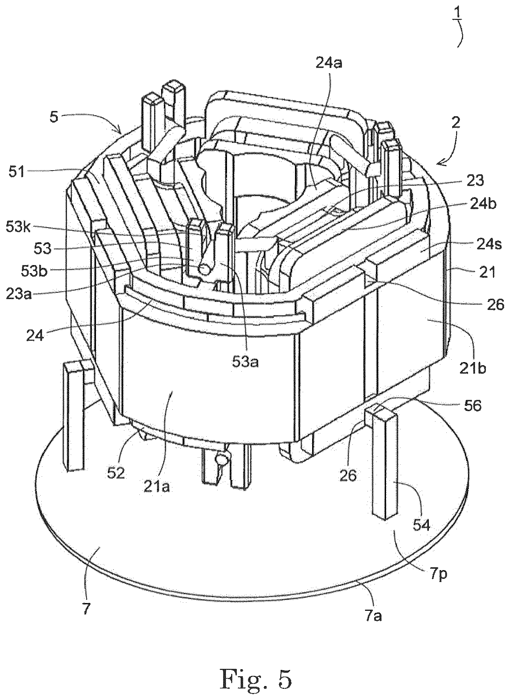

A lower lid 61 having a disk shape is disposed below the stator 2. The lower lid 61 covers a lower surface of the motor housing 6. The lower lid 61 has a through hole (not illustrated) extending therethrough in the up-down direction. A board connection terminal 54 (see Fig. 5, described later) is inserted into the through hole. Also, a housing protrusion (not illustrated) is provided at a position of an inner surface of the motor housing 6 facing a second peripheral wall 21b (see Fig. 5). The lower lid 61 has a ring-shaped step 62 facing a lower surface of the housing protrusion. A screw (not illustrated) that penetrates through the step 62 is screwed into a screw hole (not illustrated) of the housing protrusion, and hence the lower lid 61 is attached to the motor housing 6.

A plurality of stator blades 115 (see Fig. 3) are provided side by side in the circumferential direction on the outer peripheral surface of the motor housing 6. The stator blades 115 have plate shapes, and are more inclined in a direction opposite to the rotation direction R of the impeller 110 as the stator blades 115 extend upward. The stator blades 115 are curved to protrude toward the impeller 110 side. Outer edges of the plurality of stator blades 115 contact an inner surface of the fan casing 102. The stator blades 115 guide the airflow downward as indicated by arrow S when the blower 100 is driven. A cross-sectional area Sk (see Fig. 3) of a lower end of a flow passage between stator blades 115 adjacent to one another in the circumferential direction is larger than a cross-sectional area Sh (see Fig. 3) of an upper end of the flow passage.

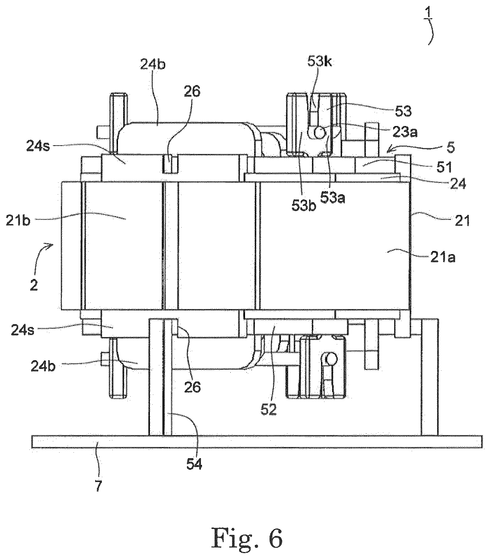

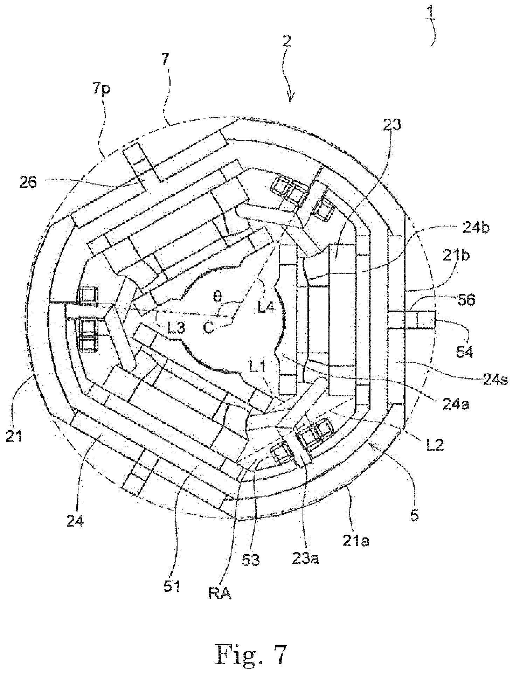

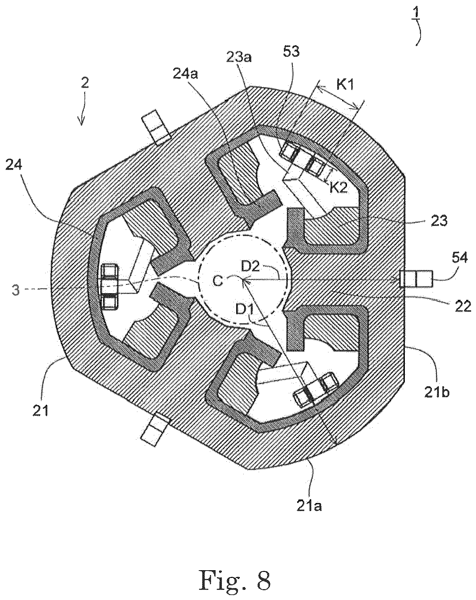

Fig. 5 is a perspective view of the motor 1 from above. Fig. 6 is a front view illustrating the motor 1. Fig. 7 is a top view (plan view) illustrating the motor 1. Fig. 8 is a plan cross-sectional view illustrating the motor 1. Figs. 5 to 8 illustrate an extended-wire connection portion 53 in a state before fusing processing. Figs. 5 to 7 omit illustration of the rotor 3.

As illustrated in Fig. 4, the motor 1 is disposed below the impeller 110. The motor 1 is an inner-rotor motor, and includes the stator 2, a rotor 3, a bearing 4, a bus bar 5, and a circuit board 7.

The stator 2 is disposed at the outer side in the radial direction of the rotor 3. The stator 2 has a stator core 20 and an insulator 24. The stator core 20 is formed of a multilayer steel plate in which electromagnetic steel sheets are stacked in the axial direction (up-down direction). The stator core 20 has a ring-shaped core back 21 and a plurality of teeth 22.

The core back 21 includes a plurality of first peripheral walls 21a and a plurality of second peripheral walls 21b that are disposed alternately in the circumferential direction and continuously in a ring shape. In a cross section perpendicular to the axial direction, an outer peripheral surface and an inner peripheral surface of each of the first peripheral walls 21a are curved lines having substantially arc shapes centered at the central axis C. In a cross section perpendicular to the axial direction, an outer peripheral surface and an inner peripheral surface of each of the second peripheral walls 21b are substantially straight lines. A distance D2 (see Fig. 8) between the outer peripheral surface of the second peripheral wall 21b and the central axis C is smaller than a distance D1 (see Fig. 8) between the outer peripheral surface of the first peripheral wall 21a and the central axis C.

Alternatively, the core back 21 may be formed in a continuous ring shape in advance, or may be formed by bending the stator core 20 having a substantially straight-line shape in plan view into a ring shape. If the core back 21 is formed by bending the stator core 20 having the substantially straight-line shape into the ring shape, a coil 23 can be easily wound around each of the teeth 22 by a coil winder (not illustrated).

The plurality of teeth 22 are radially formed to extend inward in the radial direction from the inner peripheral surfaces of the second peripheral walls 21b of the core back 21 toward a magnet 31 (see Fig. 4) of the rotor 3. Accordingly, the plurality of teeth 22 are disposed side by side in the circumferential direction. The inner peripheral surface of the second peripheral wall 21b provided with a first tooth 22 is a flat surface orthogonal to a direction in which the first tooth 22 extends. Accordingly, the coil 23 can be prevented from being unwound. The "flat surface" includes a "substantially flat surface" in addition to a strictly flat surface. In this embodiment, the teeth 22 includes three teeth 22. That is, the number of slots is three. Alternatively, the number of teeth 22 may be four or more.

The insulator 24 is formed of an insulating material such as a resin, and covers at least the inner peripheral surface of the core back 21 and the teeth 22. The insulator 24 has a plurality of umbrella portions 24a and a plurality of protrusions 24b. The umbrella portions 24a protrude in the circumferential direction with respect to the respective teeth 22, at the inner side in the radial direction (inner end portions in the radial direction) of the teeth 22. The protrusions 24b are provided above and below outer end portions in the radial direction of the respective teeth 22 (bottoms of the teeth 22), and protrude upward and downward with respect to an upper end surface and a lower end surface of the core back 21. That is, the protrusions 24b protrude outward in the axial direction with respect to a surface at one side in the axial direction of the core back 21.

Outer peripheral end portions 24s of the insulator 24 are disposed at an upper end surface and a lower end surface of each second peripheral wall 21b of the core back 21. A terminal holder 26 is provided at an upper surface of a center portion in the circumferential direction of the upper outer peripheral end portion 24s. The terminal holder 26 has a recessed shape recessed downward (in the axial direction). A terminal holder 26 is provided at a lower surface of a center portion in the circumferential direction of the lower outer peripheral end portion 24s. The terminal holder 26 has a recessed shape recessed upward (in the axial direction). That is, the terminal holders 26 have recessed shapes provided at the outer peripheral end portions 24s of the insulator 24 and recessed in the axial direction.

Each coil 23 is formed by winding an electric conductor around the periphery of the corresponding tooth 22 via the insulator 24. That is, the insulator 24 is disposed between the coils 23 and the teeth 22. The insulator 24 provides insulation between the teeth 22 and the coils 23. The three coils 23 respectively form U phase, V phase, and W phase. An extended wire 23a is extended from each of an upper end portion and a lower end portion of each coil 23.

As illustrated in Fig. 4, the rotor 3 is disposed at the inner side in the radial direction of the stator 2. The rotor 3 includes a cylindrical rotor housing 30 and a plurality of magnets 31. The plurality of magnets 31 are disposed on an outer peripheral surface of the rotor housing 30. A surface at the outer side in the radial direction of each magnet 31 faces an end surface at the inner side in the radial direction of the corresponding tooth 22. The plurality of magnets 31 have N-pole faces and S-pole faces alternately disposed at regular intervals in the circumferential direction.

Alternatively, a single ring-shaped magnet may be used instead of the plurality of magnets 31. In this case, an outer peripheral surface of the magnet may be polarized so that the N poles and S poles are alternately disposed in the circumferential direction. Still alternatively, the magnet and the rotor housing may be integrally molded with a resin containing magnetic material powder.

The rotor housing 30 holds a shaft 32 (see Fig. 4) extending in the axial direction. The shaft 32 is supported by upper and lower bearings 4, and is rotated in the rotation direction R (see Fig. 2) around the central axis C together with the rotor 3. A boss 111a (see Fig. 4) is provided at a lower surface of a center portion of the base portion 111 of the impeller 110. An upper end portion of the shaft 32 is press fitted to a hole 111b provided at the center (on the central axis C) of the boss 111a. Accordingly, the impeller 110 is coupled to the motor 1, and the impeller 110 is rotated around the central axis C by the rotation of the rotor 3.

The upper bearing 4 is disposed at the inner side in the radial direction of the core back 21. The lower bearing 4 is disposed at a center portion of the lower lid 61. The upper bearing 4 has a ball bearing. The lower bearing 4 has a friction bearing. The upper and lower bearings 4 may have other types of bearings.

The circuit board 7 is disposed below the lower lid 61. That is, the circuit board 7 is disposed below the stator 2. The circuit board 7 has a circular shape, and is formed of, for example, a resin such as epoxy resin. On the circuit board 7, an electronic component 71 is disposed and a wiring pattern is formed at the inner side in the radial direction with respect to an outer peripheral surface of the core back 21. Although described later, the circuit board 7 is electrically connected to the board connection terminals 54 of the coil-phase bas bars 52 (bus bar 5). The "circular shape" includes a substantially circular shape in addition to a strictly circular shape.

The circuit board 7 has a radius that is the same as the distance D1 between the outer peripheral surface of each first peripheral wall 21a of the core back 21 and the central axis C. Being the "same" includes being substantially the same in addition to being strictly the same. Hence, the circuit board 7 has a board protrusion 7p (see Fig. 7) protruding outward in the radial direction with respect to the outer peripheral surface of each second peripheral wall 21b.

The board protrusion 7p may be formed so that a portion of an outer edge 7a of the circuit board 7 protrudes outward in the radial direction with respect to the outer peripheral surface of each second peripheral wall 21b and another portion of the outer edge 7a is located at the same position as the position of the outer peripheral surface of each first peripheral wall 21a or a position at the inner side in the radial direction with respect to each first peripheral wall 21a in plan view.

An electronic component 71 is mounted on an upper surface of the circuit board 7. The electronic component 71 includes an AC/DC converter, an inverter, a control circuit, a position detector circuit, and so forth. The control circuit controls the rotation of the rotor 3, and includes an IC (not illustrated). The IC is not particularly limited, and may use, for example, an intelligent power module (IPM).

The AC/DC converter is a converter circuit that converts alternating-current power fed from, for example, a commercial power supply (not illustrated), into a direct-current power. The AC/DC converter includes an electrolytic capacitor 71a (see Fig. 3), a choke coil (not illustrated), and so forth.

The electrolytic capacitor 71a is a storage element with a relatively large capacity for storing an electric charge. The choke coil is a coil member in which a wire is wound around an iron core, and functions as a noise filter that removes noise of supply power of the motor 1. The inverter is a power feed circuit that feeds feed power to the stator 2, and generates feed power by using the direct-current power output from the AC/DC converter.

The position detector circuit is a detector that detects the position of the rotor 3 (that is, rotation angle) on the basis of an induced voltage that is generated at each coil 23 of the stator 2 due to the rotation of the rotor 3. The induced voltage is a voltage that is generated at the coil 23 due to a magnetic force of the corresponding magnet 31 when the rotor 3 is rotated.

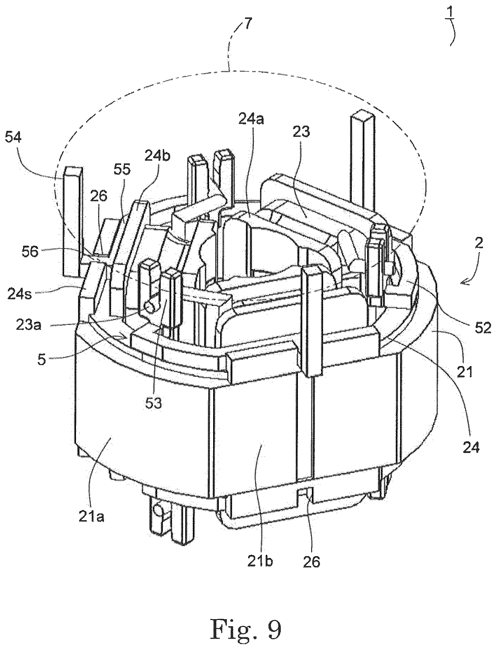

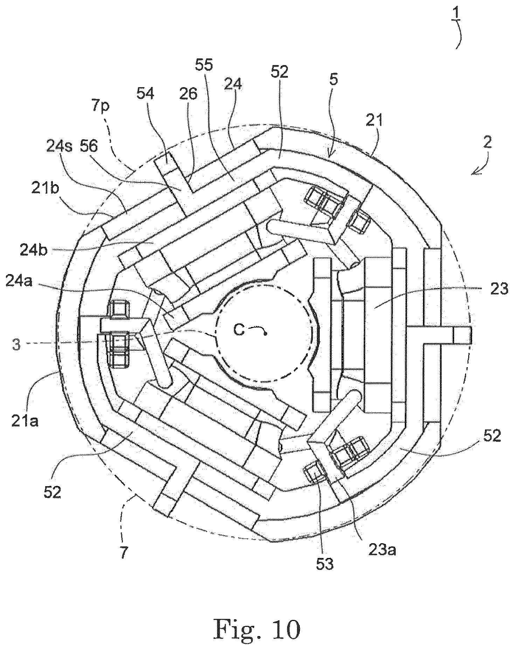

Fig. 9 is a perspective view of the motor 1 from below. Fig. 10 is a bottom view (lower view) illustrating the motor 1. The upper side in Figs. 9 and 10 corresponds to the lower side in Figs. 5 to 8. The lower side in Figs. 9 and 10 corresponds to the upper side in Figs. 5 to 8. Figs. 9 and 10 illustrate the extended-wire connection portions 53 in the state before the fusing processing. Fig. 9 omits illustration of the rotor 3.

The bus bar 5 is disposed on the upper end portion and the lower end portion of the core back 21. The insulator 24 is disposed between the bas bar 5 and the core back 21. The bus bar 5 is made of a metal having a high electric conductivity, such as copper. The bus bar 5 includes a single common bus bar 51 and three coil-phase bus bars 52. The common bus bar 51 (see Fig. 7) is disposed on the upper end portion of the core back 21. The coil-phase bus bars 52 are disposed on the lower end portion of the core back 21.

At least portions of the common bus bar 51 and coil-phase bus bars 52 are disposed at the outer side in the radial direction of the protrusions 24b of the insulator 24. Also, the outer peripheral end portions 24s of the insulator are disposed at the outer side in the radial direction with respect to the protrusions 24b, and faces the protrusions 24b. At least portions of the common bus bar 51 and coil-phase bus bars 52 are disposed between the protrusions 24b and the outer peripheral end portions 24s.

As illustrated in Fig. 7, the common bus bar 51 has a C shape in plan view. The extended-wire connection portions 53 are provided at both ends in the circumferential direction and a center portion in the circumferential direction of the common bus bar 51. That is, the common bus bar 51 according to this embodiment is provided with the three extended-wire connection portions 53. Each extended-wire connection portion 53 is electrically connected to the extended wire 23a extended from the upper end portion of the corresponding coil 23. That is, the extended-wire connection portions 53 of the common bus bar 51 are provided for the extended wires 23a at the upper end portions of the coils 23 in a one-to-one correspondence. The details of the extended-wire connection portions 53 will be described later.

If the number of teeth 22 is assumed as n, in plan view, an angle θ (see Fig. 7) that is defined by one imaginary line L3 that connects one end in the circumferential direction of the common bus bar 51 with the central axis C and the other imaginary line L4 that connects the other end in the circumferential direction of the common bus bar 51 with the central axis C is preferably 360°/n at the opening side of the C shape. For example, if the number n of the teeth 22 is three, the angle θ is preferably 120°.

As illustrated in Fig. 10, the three coil-phase bus bars 52 are disposed with gaps interposed therebetween in the circumferential direction. The coil-phase bus bars 52 each have a board connection terminal 54, an inner peripheral portion 55, and a coupling portion 56. The inner peripheral portion 55 is disposed on the lower end surface of the core back 21. The extended-wire connection portion 53 is provided at one end in the circumferential direction of the inner peripheral portion 55. The coupling portion 56 is provided at the other end in the circumferential direction of the inner peripheral portion 55.

The coupling portion 56 protrudes outward in the radial direction from the inner peripheral portion 55. The coupling portion 56 is fitted to the corresponding terminal holder 26 having the recessed shape. The board connection terminal 54 extends downward in the axial direction from an outer end in the radial direction of the coupling portion 56, and is disposed at the outer side in the radial direction with respect to the outer peripheral surface of the corresponding second peripheral wall 21b of the core back 21. Hence, the coupling portion 56 couples the inner peripheral portion 55 with the board connection terminal 54. Also, the board connection terminal 54 is held by the insulator 24 via the coupling portion 56. That is, the insulator 24 has the terminal holder 26 that holds the board connection terminal 54. Also, the board connection terminal 54 is positioned by the terminal holder 26.

The board connection terminal 54 is connected to the circuit board 7. Specifically, the board connection terminal 54 is electrically connected to the corresponding board protrusion 7p of the circuit board 7.

As described above, one end of each coil-phase bus bar 52 has the extended-wire connection portion 53, and the other end of the coil-phase bus bar 52 is connected to the circuit board 7. The extended wire 23a extended from the lower end portion of each coil 23 is electrically connected to the corresponding extended-wire connection portion 53. That is, the extended-wire connection portions 53 of the coil-phase bus bars 52 are provided for the extended wires 23a at the lower end portions of the coils 23 in a one-to-one correspondence. Also, the board connection terminals 54 of the coil-phase bus bars 52 are provided for the coils 23 in a one-to-one correspondence.

Each extended-wire connection portion 53 of the common bus bar 51 is connected to the corresponding upper extended wire 23a, and the extended-wire connection portion 53 of each coil-phase bus bar 52 is connected to the lower extended wire 23a. Accordingly, the three coils 23 are coupled by star connection. Also, the common bus bar 51 forms a neutral point.

The extended-wire connection portion 53 has a shape extending in the axial direction, and has a cut portion 53k cut in the axial direction in a state before fusing processing (described later). That is, the extended-wire connection portion 53 has a forked shape in the state before the fusing processing. The extended-wire connection portion 53 includes a first contact portion 53a that contacts the extended wire 23a, and a second contact portion 53b that contacts the extended wire 23a at a position opposite to the first contact portion 53a. The extended wire 23a is disposed in the cut portion 53k before the fusing processing. Also, a length K1 (see Fig. 8) in the circumferential direction of the extended-wire connection portion 53 is larger than a length K2 (see Fig. 8) thereof in the radial direction.

In plan view, the extended-wire connection portion 53 is disposed at the inner side in the radial direction with respect to the inner peripheral surface of the core back 21, at a position between the teeth 22 adjacent to one another in the circumferential direction. Specifically, in plan view, the extended-wire connection portion 53 is disposed in a region RA (see Fig. 7) defined by the teeth 22 adjacent to one another in the circumferential direction and the inner peripheral surface of the core back 21 that couples the teeth 22 adjacent to one another in the circumferential direction together.

The upper extended wire 23a and the upper extended-wire connection portion 53 are desirably disposed below an upper end of the protrusion 24b of the insulator 24. Also, the lower extended wire 23a and the lower extended-wire connection portion 53 are desirably disposed above a lower end of the protrusion 24b. That is, the extended wires 23a and the extended-wire connection portions 53 are desirably disposed at inner end sides in the axial direction of the protrusions 24b with respect to outer ends in the axial direction thereof.

As described above, the motor 1 includes the stator 2, and the rotor 3 that rotates around the central axis C extending upward and downward and that has the magnet 31 disposed at the inner side in the radial direction of the stator 2. The stator 2 has the ring-shaped core back 21, the plurality of teeth 22 extending inward in the radial direction from the inner peripheral surface of the core back 21 and disposed in the circumferential direction, and the coil 23 wound around each of the teeth 22. The bus bar 5 that is electrically connected to the coil 23 is disposed on the end portion at one of one side and the other side in the axial direction of the core back 21. The bus bar 5 has the extended-wire connection portion 53 that is connected to the extended wire 23a of the coil 23. In plan view, the extended-wire connection portion 53 is disposed at the inner side in the radial direction with respect to the inner peripheral surface of the core back 21, at the position between the teeth 22 adjacent to one another in the circumferential direction.

Alternatively, the motor 1 includes the stator 2, the rotor 3 that rotates around the central axis C extending upward and downward and that has the magnet 31 disposed at the inner side in the radial direction of the stator 2, and the circuit board 7 that is disposed at one of one side and the other side in the axial direction of the stator 2 and that controls the rotation of the rotor 3. The stator 2 has the ring-shaped core back 21, the plurality of teeth 22 extending inward in the radial direction from the inner peripheral surface of the core back 21 and disposed in the circumferential direction, and the coil 23 wound around each of the teeth 22. The circuit board 7 has the board protrusion 7p protruding outward in the radial direction with respect to the outer peripheral surface of the core back 21. The bus bar 5 that is electrically connected to the extended wire 23a of the coil 23 is disposed on the end portion in the axial direction of the core back 21, at the side at which the circuit board 7 is disposed. The bus bar 5 has the board connection terminal 54 that is connected to the board protrusion 7p of the circuit board 7. The board connection terminal 54 is disposed at the outer side in the radial direction with respect to the outer peripheral surface of the core back 21.

In plan view, the extended-wire connection portion 53 is disposed at the outer side in the radial direction with respect to the imaginary line L1 (see Fig. 7) that connects the outer ends in the radial direction of the umbrella portions 24a adjacent to one another in the circumferential direction. Also, in plan view, the extended-wire connection portion 53 is disposed at the outer side in the radial direction with respect to the imaginary line L2 (see Fig. 7) that connects the outer ends in the radial direction of the coils 23 adjacent to one another in the circumferential direction.

Also, in plan view, the extended-wire connection portion 53 is disposed at the center portion in the circumferential direction between the teeth 22 adjacent to one another in the circumferential direction. Also, the plurality of teeth 22 and the plurality of extended-wire connection portions 53 are disposed at equivalent intervals in the circumferential direction.

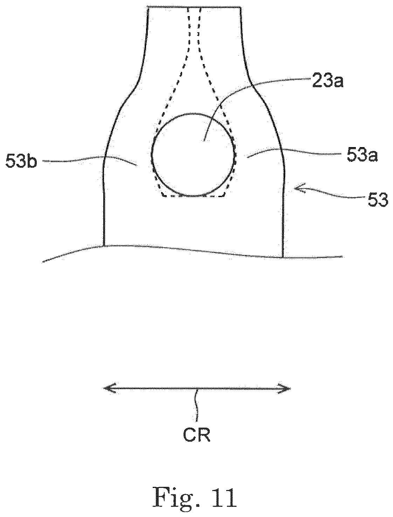

Fig. 11 is a front view illustrating the extended-wire connection portion 53 after the fusing processing. The extended-wire connection portion 53 is electrically connected to the extended wire 23a by the fusing processing using a fusing device (not illustrated). The fusing device has a pair of electrodes. The extended wire 23a is disposed in the cut portion 53k of the extended-wire connection portion 53, and then both ends in a circumferential direction CR of the extended-wire connection portion 53 are pinched by the pair of electrodes. Then, while the electrodes apply electric current to the extended-wire connection portion 53, the electrodes apply a pressure so that an upper portion of the first contact portion 53a and an upper portion of the second contact portion 53b come close to one another. Accordingly, as illustrated in Fig. 11, the first contact portion 53a, the second contact portion 53b, and the extended wire 23a are joined to one another, and the extended wire 23a is pinched between the first contact portion 53a and the second contact portion 53b. By the fusing processing, the extended wire 23a is joined and fixed to the extended-wire connection portion 53, and the bus bar 5 is electrically connected to the coil 23.

In the cleaner 200 with the above-described configuration, when the motor 1 of the blower 100 is driven, the impeller 110 is rotated in the rotation direction R around the central axis C. Accordingly, the air containing foreign substances such as dust on the floor F circulates in the order of the suction nozzle 210 (see Fig. 1), the suction pipe 207 (see Fig. 1), the air inlet port 203 (see Fig. 1), the dust collector, and the filter. The air which has passed through the filter is taken into the fan casing 102 through the air inlet port 103 of the blower 100. At this time, the air sucked through the air inlet port 103 is rectified by the bell mouth 103a, and is smoothly guided to the area between the adjacent blades 112. Hence, air intake efficiency of the blower 100 can be increased.

The air taken into the fan casing 102 circulates in the area between the adjacent blades 112, and is accelerated downward at the outer side in the radial direction by the rotating impeller 110. The air accelerated downward at the outer side in the radial direction blows downward of the impeller 110. The air blowing downward of the impeller 110 (arrow S, see Fig. 4) flows into the flow passage 116. The air flowing into the flow passage 116 circulates between the stator blades 115 adjacent to one another in the circumferential direction. At this time, the cross-sectional area Sk of the lower end of the flow passage between the stator blades 115 adjacent to one another in the circumferential direction is larger than the cross-sectional area Sh of the upper end of the flow passage. Hence, the dynamic pressure of the airflow (arrow S) circulating through the flow passage 116 is easily converted into the static pressure.

The airflow (arrow S) passing through the lower end of the stator blades 115 is discharged outside the fan casing 102 through the air outlet port 104. The airflow discharged outside the fan casing 102 circulates through the air passage in the casing 202 of the cleaner 200, and is discharged outside the casing 202 through the air outlet port 204 (see Fig. 1). Accordingly, the cleaner 200 can clean up the floor F.

In this case, the impeller protrusion 111p having a ring shape is provided at the lower surface of the base portion 111, and the ring-shaped groove 6g dented downward is provided at the upper surface of the motor housing 6. At least a portion of the impeller protrusion 111p is housed in the groove 6g. Accordingly, the airflow circulating through the flow passage 116 (arrow S) can be prevented from flowing into the impeller 110 (space SP, see Fig. 4) while an increase in the size in the axial direction of the blower 100 is suppressed. Hence, air sending efficiency of the blower 100 can be increased.

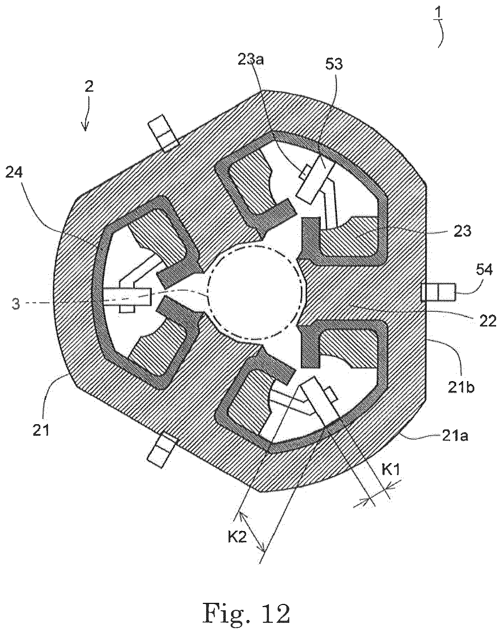

Fig. 12 is a plan cross-sectional view of a motor 1 according to a modification of the embodiment in the state before the fusing processing. The length K2 in the radial direction of the extended-wire connection portion 53 may be larger than the length K1 thereof in the circumferential direction. Accordingly, interference between the electrodes of the fusing device and the coil 23 during the fusing processing can be decreased.

According to this embodiment, the motor 1 includes the stator 2, and the rotor 3 that rotates around the central axis C extending upward and downward and that has the magnet 31 disposed at the inner side in the radial direction of the stator 2. The stator 2 has the ring-shaped core back 21, the plurality of teeth 22 extending inward in the radial direction from the inner peripheral surface of the core back 21 and disposed in the circumferential direction, and the coil 23 wound around each of the teeth 22. The bus bar 5 that is electrically connected to the coil 23 is disposed on the end portion at one of one side and the other side in the axial direction of the core back 21. The bus bar 5 has the extended-wire connection portion 53 that is connected to the extended wire 23a of the coil 23. In plan view, the extended-wire connection portion 53 is disposed at the inner side in the radial direction with respect to the inner peripheral surface of the core back 21, at the position between the teeth 22 adjacent to one another in the circumferential direction. Accordingly, the extended-wire connection portion 53 is disposed so as not to overlap the teeth 22 in the axial direction. Hence, an increase in the length in the axial direction of the motor 1 can be suppressed, and the motor 1 can be downsized.

The stator 2 further includes the umbrella portions 24a protruding in the circumferential direction with respect to the teeth 22, at the inner side in the radial direction of the teeth 22. In plan view, the extended-wire connection portion 53 is disposed at the outer side in the radial direction with respect to the imaginary line L1 that connects the outer ends in the radial direction of the umbrella portions 24a adjacent to one another in the circumferential direction. Accordingly, the electrodes of the fusing device can easily pinch the extended-wire connection portion 53, and hence workability during the joining work between the extended wire 23a and the extended-wire connection portion 53 can be increased.

In plan view, the extended-wire connection portion 53 is disposed at the outer side in the radial direction with respect to the imaginary line L2 that connects the outer ends in the radial direction of the coils 23 adjacent to one another in the circumferential direction. Accordingly, the electrodes of the fusing device can further easily pinch the extended-wire connection portion 53, and hence the workability during the joining work between the extended wire 23a and the extended-wire connection portion 53 can be further increased.

The extended-wire connection portion 53 includes the first contact portion 53a that contacts the extended wire 23a, and the second contact portion 53b that contacts the extended wire 23a at the position opposite to the first contact portion 53a. The extended wire 23a is pinched between the first contact portion 53a and the second contact portion 53b. Accordingly, the extended wire 23a can be easily connected to the bus bar 5.

In plan view, the extended-wire connection portion 53 is disposed at the center portion in the circumferential direction between the teeth 22 adjacent to one another in the circumferential direction. Accordingly, the distance between the extended-wire connection portion 53 and the coil 23 is ensured, and the extended wire 23a and the extended-wire connection portion 53 can be easily joined and fixed to one another.

The plurality of teeth 22 and the plurality of extended-wire connection portions 53 are disposed at the equivalent intervals in the circumferential direction. Accordingly, the creepage distance between each extended-wire connection portion 53 and the corresponding tooth 22 (the distance along the inner peripheral surface of the core back 21) can be easily secured, and a short circuit of the extended wire 23a can be prevented from occurring.

The length K2 in the radial direction of the extended-wire connection portion 53 may be larger than the length K1 thereof in the circumferential direction. Accordingly, when the extended wire 23a and the extended-wire connection portion 53 are joined and fixed to one another by the fusing processing, the interference between the electrodes of the fusing device and the coil 23 can be decreased.

The plurality of coils 23 are coupled by star connection. The bus bar 5 includes the single common bus bar 51 that forms the neutral point, and the three coil-phase bus bars 52 provided for the coils 23 in a one-to-one correspondence. The common bus bar 51 has the C shape in plan view. Accordingly, the material of the common bus bar 51 can be decreased as compared with a case where the common bus bar 51 is formed in a circular shape. The manufacturing cost of the motor 1 can be decreased.

If the number of teeth 22 is assumed as n, in plan view, the angle θ that is defined by the one imaginary line L3 that connects the one end in the circumferential direction of the common bus bar 51 with the central axis C and the other imaginary line L4 that connects the other end in the circumferential direction of the common bus bar 51 with the central axis C is preferably 360°/n at the opening side of the C shape. Accordingly, the one end and the other end in the circumferential direction of the common bus bar 51 can be disposed in accordance with the teeth 22. The common bus bar 51 can be easily positioned in the circumferential direction.

The circuit board 7 that controls the rotation of the rotor 3 is provided. The common bus bar 51 is disposed on the end portion at the one side in the axial direction of the core back 21. Further, the coil-phase bus bars 52 are disposed on the end portion at the other side in the axial direction of the core back 21. The one end of each coil-phase bus bar 52 has the corresponding extended-wire connection portion 53, and the other end of the coil-phase bus bar 52 is connected to the circuit board 7.
Accordingly, the common bus bar 51 and the coil-phase bus bars 52 are disposed in a distributed manner in the axial direction of the core back 21. Hence, the motor 1 can be downsized while the wiring is prevented from being complicated.

The extended-wire connection portions 53 are provided at both ends in the circumferential direction of the common bus bar 51. Accordingly, the common bus bar 51 can be further easily positioned in the circumferential direction.

The motor 1 includes the insulator 24 that covers at least the inner peripheral surface of the core back 21 and the teeth 22. The insulator 24 provides insulation between the teeth 22 and the coils 23. The insulator 24 has the protrusions 24b protruding outward in the axial direction with respect to the surface at the one side in the axial direction of the core back 21. At least a portion of the bus bar 5 is disposed at the outer side in the radial direction of the protrusions 24b. The extended wire 23a and the extended-wire connection portion 53 may be disposed at the inner end side in the axial direction of the protrusion 24b with respect to the outer end in the axial direction thereof. Accordingly, a short circuit between the coil 23 and the bus bar 5 can be easily prevented from occurring while an increase in the length in the axial direction of the motor 1 is suppressed.

Also, the blower 100 includes the motor 1, the impeller 110 that is disposed above the motor 1 and that rotates around the central axis C by driving of the motor 1, and the motor housing 6 that houses the stator 2. The inner peripheral surface 6a of the motor housing 6 located above the stator 2 is inclined toward the central axis C as the inner peripheral surface 6a extends upward. Accordingly, the motor housing 6 can be downsized and the blower 100 can be downsized.

The motor 1 includes the stator 2, the rotor 3 that rotates around the central axis C extending upward and downward and that has the magnet 31 disposed at the inner side in the radial direction of the stator 2, and the circuit board 7 that is disposed at one of one side and the other side in the axial direction of the stator 2 and that controls the rotation of the rotor 3. The stator 2 has the ring-shaped core back 21, the plurality of teeth 22 extending inward in the radial direction from the inner peripheral surface of the core back 21 and disposed in the circumferential direction, and the coil 23 wound around each of the teeth 22. The circuit board 7 has the board protrusion 7p protruding outward in the radial direction with respect to the outer peripheral surface of the core back 21. The bus bar 5 that is electrically connected to the extended wire 23a of the coil 23 is disposed on the end portion in the axial direction of the core back 21, at the side at which the circuit board 7 is disposed. The bus bar 5 has the board connection terminal 54 that is connected to the board protrusion 7p. The board connection terminal 54 is disposed at the outer side in the radial direction with respect to the outer peripheral surface of the core back 21.

Accordingly, the board connection terminal 54 can be connected to the circuit board 7 at the position at the outer side in the radial direction with respect to the outer peripheral surface of the core back 21 (at the outer edge portion of the circuit board 7). Accordingly, when the board connection terminal 54 is connected to the circuit board 7, the connection position does not have to be a position at the inner side in the radial direction with respect to the outer peripheral surface (for example, the center portion) of the core back 21. Accordingly, the degree of freedom of design for the wiring pattern on the circuit board 7 can be increased.

The motor 1 includes the insulator 24 that covers at least the inner peripheral surface of the core back 21 and the teeth 22. The insulator 24 provides insulation between the teeth 22 and the coils 23. The insulator 24 has the terminal holder 26 that holds the board connection terminal 54. Accordingly, the board connection terminal 54 can be held by using the insulator 24. Hence, an increase in the number of parts of the motor 1 can be suppressed.

The bus bar 5 has the inner peripheral portion 55 disposed on the end portion in the axial direction of the core back 21, and the coupling portion 56 that extends outward in the radial direction from the inner peripheral portion 55 and couples the inner peripheral portion 55 with the board connection terminal 54. The terminal holder 26 has the recessed shape provided at the outer peripheral end portion 24s of the insulator 24 and recessed in the axial direction. The coupling portion 56 is fitted to the terminal holder 26. Accordingly, the terminal holder 26 can be easily provided.

The terminal holder 26 is disposed at each of the upper end surface and the lower end surface of the corresponding outer peripheral end portion 24s of the insulator 24. Accordingly, in an assembly step of the motor 1, the upper side and the lower side of the insulator 24 are not required to be distinguished from one another. Hence, the number of manufacturing steps of the motor 1 can be suppressed.

The core back 21 includes the plurality of first peripheral walls 21a and the plurality of second peripheral walls 21b that are disposed alternately in the circumferential direction. The distance D2 between the outer peripheral surface of each second peripheral wall 21b and the central axis C is smaller than the distance D1 between the outer peripheral surface of each first peripheral wall 21a and the central axis C. The board connection terminal 54 is disposed at the outer side in the radial direction with respect to the second peripheral wall 21b in plan view. Accordingly, an increase in the length in the radial direction of the motor 1 can be suppressed while the board connection terminal 54 is disposed at the outer side in the radial direction with respect to the outer peripheral surface of the core back 21.

Each tooth 22 extends inward in the radial direction from the inner peripheral surface of the second peripheral wall 21b. The inner peripheral surface of the second peripheral wall 21b is a flat surface orthogonal to the direction in which the tooth 22 extends. Accordingly, the coil 23 can be prevented from being unwound.

The board protrusion 7p is formed so that the portion of the outer edge 7a of the circuit board 7 protrudes outward in the radial direction with respect to the outer peripheral surface of each second peripheral wall 21b, and the other portion of the outer edge 7a is located at the same position as the position of the outer peripheral surface of each first peripheral wall 21a or the position at the inner side in the radial direction with respect to the outer peripheral surface of each first peripheral wall 21a in plan view. Accordingly, an increase in the length in the radial direction of the motor 1 can be suppressed while the circuit board 7 is provided.

The circuit board 7 has the circular shape, the outer peripheral surface of the first peripheral wall 21a is the curved line extending along the outer periphery of the circuit board 7 in the cross section perpendicular to the axial direction, and the radius of the circuit board 7 is the same as the distance D1 between the outer peripheral surface of the first peripheral wall 21a and the central axis C. Accordingly, an increase in the length in the radial direction of the motor 1 including the circuit board 7 can be easily suppressed.

The first peripheral wall 21a is disposed between the teeth 22 adjacent to one another in the circumferential direction. The extended-wire connection portion 53 is disposed at the inner side in the radial direction with respect to the inner peripheral surface of the first peripheral wall 21a. Accordingly, the space between the teeth 22 (between the coils 23) can be efficiently used.

The plurality of coil-phase bus bars 52 (bus bar 5) are provided, and the plurality of coil-phase bus bars 52 are disposed with gaps interposed therebetween in the circumferential direction. Accordingly, the material of the bus bar 5 can be decreased as compared with a case where the bus bar 5 is formed in a continuous circular shape. Also, the bus bar 5 is prevented from being overlapped in the radial direction, and an increase in the length in the radial direction of the motor 1 can be easily suppressed.

The plurality of coils 23 are coupled by star connection. The bus bar 5 includes the single common bus bar 51 that forms a neutral point, and the plurality of coil-phase bus bars 52 provided for the teeth 22 in a one-to-one correspondence. The common bus bar 51 is disposed on the end portion at the one side in the axial direction of the core back 21. The coil-phase bus bars 52 are disposed on the end portion at the other side in the axial direction of the core back 21. The board connection terminal 54 is disposed at the one end of each coil-phase bus bar 52. Accordingly, the common bus bar 51 and the coil-phase bus bars 52 are disposed in a distributed manner in the axial direction of the core back 21. The wiring can be prevented from being complicated.

If the three teeth 22 are provided and the three board connection terminals 54 are provided, the motor 1 having a small number of slots and being capable of rotating at high speed can be easily provided.

The blower 100 includes the motor 1, the impeller 110 that is disposed above the motor 1 and that rotates around the central axis C by driving of the motor 1, and the motor housing 6 that houses the stator 2. The circuit board 7 is disposed below the stator 2. The inner peripheral surface 6a of the motor housing 6 located above the stator 2 is inclined toward the central axis C as the inner peripheral surface 6a extends upward. Accordingly, the motor housing 6 can be downsized and the blower 100 can be downsized.

In this embodiment, the motor 1 and the blower 100 are mounted in the cleaner 200; however, the motor 1 and the blower 100 may be mounted in office automation equipment, medical equipment, a transportation system, or home-use electrical appliances other than the cleaner 200.

The present disclosure can be used for, for example, an inner-rotor motor, and a blower including the motor.

Features of the above-described preferred embodiments and the modifications thereof may be combined appropriately as long as no conflict arises.

While preferred embodiments of the present disclosure have been described above, it is to be understood that variations and modifications will be apparent to those skilled in the art without departing from the scope and spirit of the present disclosure. The scope of the present disclosure, therefore, is to be determined solely by the following claims.

## Claims

1. A motor (1) comprising:
a stator (2);
a rotor (3) that rotates around a central axis (C) extending upward and downward and that has a magnet (31) disposed at an inner side in a radial direction of the stator (2); and
a circuit board (7) that is disposed at one of one side and the other side in the axial direction of the stator (2) and that controls rotation of the rotor (3),
wherein the stator (2) includes
a ring-shaped core back (21),
a plurality of teeth (22) extending inward in the radial direction from an inner peripheral surface of the core back (21) and disposed in a circumferential direction, and
a coil (23) wound around each of the teeth (22),
wherein the circuit board (7) has a board protrusion (7p) protruding outward in the radial direction with respect to an outer peripheral surface of the core back (21),
wherein a bus bar (5) that is connected to an extended wire (23a) of the coil (23) is disposed on an end portion in the axial direction of the core back (21), at a side at which the circuit board (7) is disposed,
wherein the bus bar (5) has a board connection terminal (54) that is connected to the board protrusion (7p), and
wherein the board connection terminal (54) is disposed at an outer side in the radial direction with respect to the outer peripheral surface of the core back (21).

2. The motor (1) according to claim 1, further comprising:
an insulator (24) that covers at least the inner peripheral surface of the core back (21) and the teeth (22), and provides insulation between the teeth (22) and the coils (23),
wherein the insulator (24) has a terminal holder (26) that holds the board connection terminal (54).

3. The motor (1) according to claim 2,
wherein the bus bar (5) includes
an inner peripheral portion (55) disposed on an end portion in the axial direction of the core back (21), and
a coupling portion (56) that extends outward in the radial direction from the inner peripheral portion (55) and that couples the inner peripheral portion (55) with the board connection terminal (54),
wherein the terminal holder (26) has a recessed shape provided at an outer peripheral end portion (24s) of the insulator (24) and recessed in the axial direction, and
wherein the coupling portion (56) is fitted to the terminal holder (26).

4. The motor (1) according to claim 3,
wherein the terminal holder (26) is disposed at each of an upper end surface and a lower end surface of the outer peripheral end portion (24s) of the insulator (24).

5. The motor (1) according to any one of claims 1 to 4,
wherein the core back (21) includes a plurality of first peripheral walls (21a) and a plurality of second peripheral walls (21b) that are disposed alternately in the circumferential direction,
wherein a distance (D2) between an outer peripheral surface of each of the second peripheral walls (21b) and the central axis (C) is smaller than a distance (D1) between an outer peripheral surface of each of the first peripheral walls (21a) and the central axis (C), and
wherein the board connection terminal (54) is disposed at the outer side in the radial direction with respect to each of the second peripheral walls (21b) in plan view.

6. The motor (1) according to claim 5,
wherein the teeth (22) extend inward in the radial direction from inner peripheral surfaces of the second peripheral walls (21b), and
wherein the inner peripheral surfaces of the second peripheral walls (21b) are flat surfaces orthogonal to directions in which the teeth (22) extend.

7. The motor (1) according to claim 5 or 6,
wherein the board protrusion (7p) is formed so that a portion of an outer edge (7a) of the circuit board (7) protrudes outward in the radial direction with respect to the outer peripheral surface of each of the second peripheral walls (21b) and another portion of the outer edge (7a) is located at a position being the same as a position of the outer peripheral surface of each of the first peripheral walls (21a) or a position at the inner side in the radial direction with respect to the outer peripheral surface of each of the first peripheral walls (21a) in plan view.

8. The motor (1) according to claim 7,
wherein the circuit board (7) has a circular shape, the outer peripheral surface of each of the first peripheral walls (21a) is a curved line extending along an outer periphery of the circuit board (7) in a cross section perpendicular to the axial direction, and
wherein a radius of the circuit board (7) is the same as the distance (D1) between the outer peripheral surface of each of the first peripheral walls (21a) and the central axis (C).

9. The motor (1) according to any one of claims 5 to 8,
wherein the bus bar (5) has an extended-wire connection portion (53) connected to the extended wire (23a), and
wherein, in plan view, the extended-wire connection portion (53) is disposed at an inner side in the radial direction with respect to the inner peripheral surface of the core back (21), at a position between the teeth (22) adjacent to one another in the circumferential direction.

10. The motor (1) according to claim 9,
wherein each of the first peripheral walls (21a) is disposed between the teeth (22) adjacent to one another in the circumferential direction, and
wherein the extended-wire connection portion (53) is disposed at the inner side in the radial direction with respect to the inner peripheral surface of each of the first peripheral walls (21a).

11. The motor (1) according to any one of claims 1 to 4,
wherein the bus bar (5) has an extended-wire connection portion (53) connected to the extended wire (23a), and
wherein, in plan view, the extended-wire connection portion (53) is disposed at the inner side in the radial direction with respect to the inner peripheral surface of the core back (21), at a position between the teeth (22) adjacent to one another in the circumferential direction.

12. The motor (1) according to any one of claims 9 to 11,
wherein a length (K2) in the radial direction of the extended-wire connection portion (53) may be larger than a length (K1) in the circumferential direction of the extended-wire connection portion (53).

13. The motor (1) according to any one of claims 1 to 12,
wherein a plurality of the bus bars (5) are provided, and the plurality of bus bars (5) are disposed with gaps interposed therebetween in the circumferential direction.

14. The motor (1) according to any one of claims 1 to 12,
wherein the plurality of coils (23) are coupled by star connection,
wherein the bus bar (5) includes
a single common bus bar (51) that forms a neutral point, and
a plurality of coil-phase bus bars (52) provided for the teeth (22) in a one-to-one correspondence,
wherein the common bus bar (51) is disposed on an end portion at the one side in the axial direction of the core back (21), and the coil-phase bus bars (52) are disposed on an end portion at the other side in the axial direction of the core back (21), and
wherein the board connection terminal (54) is disposed at one end of each of the coil-phase bus bars (52).

15. The motor (1) according to claim 14,
wherein the teeth (22) include three teeth (22), and the board connection terminals (54) include three board connection terminals (54).

16. A blower (100) comprising:
the motor (1) according to any one of claims 1 to 15;
an impeller (110) that is disposed above the motor (1) and that rotates around the central axis (C) by driving of the motor (1); and
a motor housing (4) that houses the stator (2),
wherein the circuit board (7) is disposed below the stator (2), and
wherein an inner peripheral surface (6a) of the motor housing (6) located above the stator (2) is inclined toward the central axis (C) as the inner peripheral surface (6a) extends upward.
